# EUROPÄISCHE PATENTSCHRIFT

(11) **EP 3 682 288 B1**
(45) Veröffentlichungstag und Bekanntmachung des Hinweises auf die Patenterteilung: **07.06.2023**
(21) Anmeldenummer: 18778395.6
(22) Anmeldetag: 14.09.2018
(51) Int. Cl.: G02B 27/01, G02B 27/00, G02B 3/00

(54) **OPTISCHES BAUTEIL**
OPTICAL COMPONENT
COMPOSANT OPTIQUE

(30) Priorität: 15.09.2017 AT 507762017
(43) Veröffentlichungstag der Anmeldung: 22.07.2020
(73) Patentinhaber: Viewpoint Sicherheitsforschung - Blickforschung GmbH, 1030 Wien (AT)
(72) Erfinder: BLATT, Jan, 1150 Wien (AT); KOZA, Martin, 1060 Wien (AT); LINSENMAIER, Frank, 71384 Weinstadt (DE)
(74) Vertreter: Gibler & Poth Patentanwälte KG
(86) Internationale Anmeldenummer: PCT/EP2018/074902
(87) Internationale Veröffentlichungsnummer: WO 2019/053198

(56) Entgegenhaltungen:
- WO-A1-2013/168811
- JP-A- 2003 202 411
- US-A1- 2005 030 647
- US-A1- 2007 221 826
- US-A1- 2010 073 534
- US-A1- 2013 194 676

## Beschreibung

Die Erfindung betrifft eine Kamera gemäß dem Oberbegriff des Patentanspruches 1.

Es sind optische Bauteile bekannt, welche dazu vorgesehen sind ein Objektiv für eine Kamera auszubilden. Bekannte optische Bauteile weisen ein umschließendes Gehäuse auf, in welchem Linsensysteme, Blenden und etwaige optische Filter angeordnet sind.

Ein möglicher Einsatzzweck derartiger Kameras ist die Erfassung der Blickrichtung eines Auges bei einer Eye-Tracking Brille. Hierbei muss die Kamera besonders kompakt ausgebildet sein, um den Benutzer der Eye-Tracking Brille nicht zu stören.

Nachteilig an bekannten optischen Bauteilen ist, dass diese bei einer sehr kompakten Bauweise sehr aufwendig herzustellen sind. Hierbei müssen die einzelnen Komponenten mit hoher Präzision aufeinander abgestimmt werden, damit diese korrekt entlang der optischen Achse angeordnet sind und auch die Abstände zueinander passend sind.

Aus der US 2007/0221826 A1 ist ein optisches Bauteil mit einer Linse, einer Blende und einem Filter bekannt, welche flächig miteinander verbunden sind. Die Linse ist sphärisch doppelkonvex, wobei die Krümmung auf der, dem Bildsensor abgewandte Seite deutlich ausgeprägt ist.

Aus der US 2010/073534 A1 ist ein optisches Bauteil bekannt, wobei das optische Bauteil in eine lichtschützende Halterung eingesetzt ist und dabei eine Durchbrechung verschließt, wobei die lichtschützende Halterung eine Außenhülle eines Kameramoduls ausbildet.

Aus der US 2005/0030647 A1 ist ein optisches Bauteil mit einem monolithischen Aufbau bekannt, wobei das optische Bauteil wenigstens drei Linsen umfasst.

Aus der JP 2003 202411 A ist eine längliche Anordnung vieler nebeneinander angeordneter Linsen bekannt, welche für die Erfassung mehrere Bildpunkte entlang einer Line, beispielsweise einem Scanner oder Fax, vorgesehen sind.

Aus der WO 2013/168811 A1 ist ein Mehrlinsenarray bekannt, wobei eine Blende sandwichartig zwischen zwei flächige Bauteile mit mehreren Linsen angeordnet wird.

Aus der US 2013/194676 A1 ist ein optisches Bauteil bestehend aus zwei Linsenkörper und einer dazwischen angeordneten Blende bekannt.

Aufgabe der Erfindung ist es daher eine Kamera der eingangs genannten Art anzugeben, mit welchem die genannten Nachteile vermieden werden können, mit welchem eine besonders kompakte und zuverlässig funktionierende Kamera einfach zu fertigen ist.

Erfindungsgemäß wird dies durch die Merkmale des Patentanspruches 1 erreicht.

Dadurch ergibt sich der Vorteil, dass die Kamera, insbesondere für eine Eye-Tracking Brille, besonders kompakt ausgebildet werden kann, mechanisch robust ist und trotzdem einfach zu fertigen ist. Dabei werden der optische Filter, die Blende und die Linse insbesondere Teil eines einstückigen, schichtartigen Körpers, welcher das optische Bauteil ausbildet. Hierbei hat sich gezeigt, dass insbesondere bei Kameras zur Erfassung der Blickrichtung eines Auges bei einer Eye-Tracking Brille die Brennweite und/oder die Öffnungsweite kaum verändert werden braucht, weshalb die durch die flächige Verbindung verloren gegangene Beweglichkeit und Anpassbarkeit kaum nachteilig ist. Durch die flächige Verbindung der einzelnen Komponenten, also des optischen Filters, der Blende und der Linse, des optischen Bauteils miteinander, statt der Einbringung der einzelnen Komponenten in ein Gehäuse, kann eine wesentlich kompaktere Bauform erreicht werden, da die Zwischenräume zwischen den einzelnen Komponenten entfallen. Weiters können sehr einfach die korrekten Abstände und Ausrichtungen, insbesondere von Blende zu Linse, erreicht werden. Weiters kann die Fertigung wesentlich einfacher erfolgen.

Die Erfindung betrifft ein Verfahren zum Herstellen einer Kamera gemäß dem Oberbegriff des Patentanspruches 11.

Aufgabe der Erfindung ist es daher weiters ein Verfahren anzugeben, mit welchem die genannten Nachteile vermieden werden können, mit welchem besonders einfach ein optisches Bauteil für eine kompakte und zuverlässig funktionierende Kamera zu fertigen ist.

Erfindungsgemäß wird dies durch die Merkmale des Patentanspruches 11 erreicht.

Die Vorteile des Verfahrens entsprechen den Vorteilen der Kamera.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform des optischen Bauteils im Querschnitt;
Fig. 2 eine zweite bevorzugte Ausführungsform des optischen Bauteils im
   [weiter auf Seite 3 der ursprünglichen Beschreibung] Querschnitt;
Fig. 3 eine dritte bevorzugte Ausführungsform des optischen Bauteils im Querschnitt;
Fig. 4 eine vierte bevorzugte Ausführungsform des optischen Bauteils im Querschnitt;
Fig. 5 eine fünfte bevorzugte Ausführungsform des optischen Bauteils im Querschnitt;
Fig. 6 eine sechste bevorzugte Ausführungsform des optischen Bauteils im Querschnitt;
Fig. 7 eine siebte bevorzugte Ausführungsform des optischen Bauteils im Querschnitt;
Fig. 8 eine erste bevorzugte Ausführungsform des optischen Filters im Querschnitt;
Fig. 9 eine zweite bevorzugte Ausführungsform des optischen Filters im Querschnitt;
Fig. 10 eine erste bevorzugte Ausführungsform der Kamera im Querschnitt;
Fig. 11 eine zweite bevorzugte Ausführungsform der Kamera im Querschnitt;
Fig. 12 eine dritte bevorzugte Ausführungsform der Kamera im Querschnitt;
Fig. 13 eine vierte bevorzugte Ausführungsform der Kamera im Querschnitt;
Fig. 14 eine fünfte bevorzugte Ausführungsform der Kamera im Querschnitt;
Fig. 15 ein Diagramm zur Veranschaulichung der Funktionsweise einer bevorzugten Ausführungsform des optischen Filters;
Fig. 16 ein erster Schritt eines bevorzugten Herstellungsverfahrens für das optische Bauteil;
Fig. 17 ein zweiter Schritt des bevorzugten Herstellungsverfahrens für das optische Bauteil;
Fig. 18 ein dritter Schritt des bevorzugten Herstellungsverfahrens für das optische Bauteil;
Fig. 19 ein vierter Schritt des bevorzugten Herstellungsverfahrens für das optische Bauteil; und
Fig. 20 eine sechste bevorzugte Ausführungsform der Kamera im Querschnitt

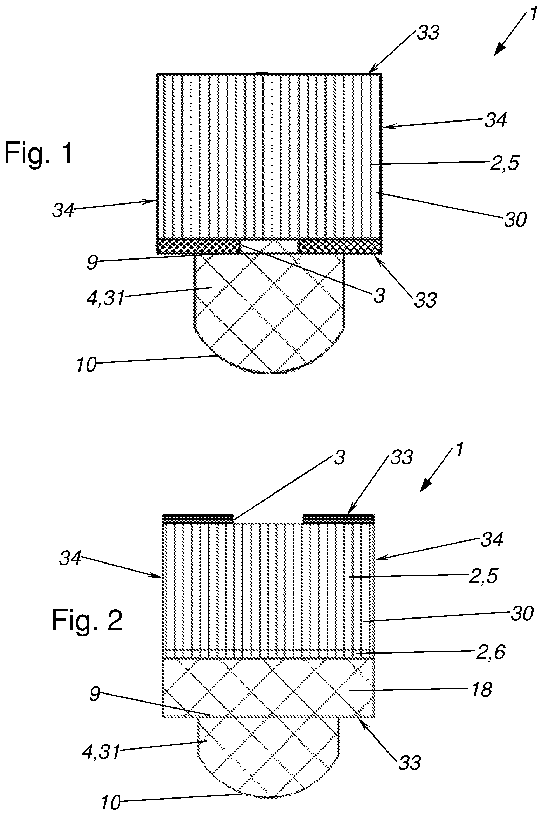

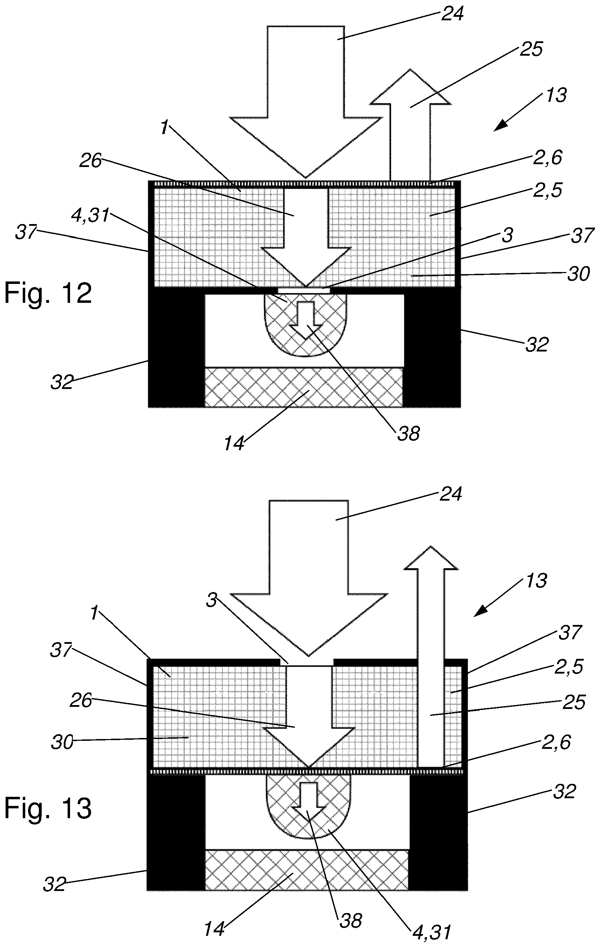

Die Fig. 1 bis 14 sowie 20 zeigen zumindest Teile bevorzugter Ausführungsformen eines optischen Bauteils 1 umfassend einen optischen Filter 2, eine Blende 3 und eine Linse 4, wobei der optische Filter 2, die Blende 3 und die Linse 4 optisch zusammenwirken. Das optische Bauteil 1 ist dazu vorgesehen als Objektiv einer Kamera 13 verwendet zu werden. Das optische Zusammenwirken des optischen Filters 2, der Blende 3 und der Linse 4 bedeutet hierbei, dass diese als Optik zusammenwirken, und von einem Gegenstand kommende Lichtstrahlen auf einer Bildebene abbilden. Die Blende 2 kann insbesondere eine Aperturblende sein, welche die Belichtungsstärke sowie die Tiefenschärfe beeinflusst. Die Linse 4 ist eine optische Linse 4, welche vorgesehen ist die durchstrahlenden Lichtstrahlen im Sinne der geometrischen Optik zu beeinflussen. Das optische Bauteil 1 kann bevorzugt genau eine Linse 4 aufweisen. Der optische Filter 2 ist ein Spektralfilter, welcher dazu vorgesehen ist für Teile des Lichtspektrums stärker durchlässig zu sein als für andere Teile des Lichtspektrums. Der Begriff Licht bezieht sich hierbei nicht nur auf sichtbares Licht, sondern auch auf dem sichtbaren Spektrum benachbarte Wellenlängenbereiche.

Vorgesehen ist, dass der optische Filter 2, die Blende 3 und die Linse 4 an einander zugewandten Flächen zumindest mittelbar flächig miteinander verbunden sind. Zumindest mittelbar flächig miteinander verbunden bedeutet hierbei, dass etwaige flächige Zwischenschichten zwischen dem optischen Filter 2, der Blende 3 und/oder der Linse 4 angeordnet sein können. Insbesondere jedoch nicht notwendigerweise sind der optische Filter 2, die Blende 3 und die Linse 4 dabei derart miteinander verbunden, dass diese Teil eines spaltfreien und/oder hohlraumfreien Körpers sind. Der optische Bauteil 1 kann hierbei als einzelner kompakter Körper bezeichnet werden. Die Verbindung kann insbesondere materialschlüssig erfolgen, also bevorzugt durch kleben, bonden, auftragen, beschichten und dergleichen. Der optische Filter 2, die Blende 3 und die Linse 4 können dabei nicht zerstörungsfrei lösbar miteinander verbunden sein.

Bevorzugt kann vorgesehen sein, dass die Linse 4 eine optische Achse aufweist, und dass der optische Filter 2, die Blende 3 und die Linse 4 entlang der optischen Achse angeordnet sind. Hierbei kann vorgesehen sein, dass Verbindungsflächen zwischen optischen Filter 2, der Blende 3 und/oder der Linse 4 bei der optischen Achse im Wesentlichen normal zu der optischen Achse stehen.

Dadurch ergibt sich der Vorteil, dass die Kamera 13, insbesondere für eine Eye-Tracking Brille, besonders kompakt ausgebildet werden kann, mechanisch robust ist und trotzdem einfach zu fertigen ist. Dabei werden der optische Filter 2, die Blende 3 und die Linse 4 insbesondere Teil eines einstückigen, schichtartigen Körpers, welcher das optische Bauteil 1 ausbildet. Hierbei hat sich gezeigt, dass insbesondere bei Kameras 13 zur Erfassung der Blickrichtung eines Auges 19 bei einer Eye-Tracking Brille die Brennweite und/oder die Öffnungsweite kaum verändert werden braucht, weshalb die durch die flächige Verbindung verloren gegangene Beweglichkeit und Anpassbarkeit kaum nachteilig ist. Durch die flächige Verbindung der einzelnen Komponenten, also des optischen Filters 2, der Blende 3 und der Linse 4, des optischen Bauteils 1 miteinander, statt der Einbringung der einzelnen Komponenten in ein Gehäuse, kann eine wesentlich kompaktere Bauform erreicht werden, da die Zwischenräume zwischen den einzelnen Komponenten entfallen. Weiters können sehr einfach die korrekten Abstände und Ausrichtungen, insbesondere von Blende 3 zu Linse 4, erreicht werden. Weiters kann die Fertigung wesentlich einfacher erfolgen.

Weiters ist ein Verfahren zum Herstellen des optischen Bauteils 1 umfassend den optischen Filter 2, die Blende 3 und die Linse 4 vorgesehen, wobei der optische Filter 2, die Blende 3 und die Linse 4 optisch zusammenwirken, und wobei der optische Filter 2, die Blende 3 und die Linse 4 an einander zugewandten Flächen zumindest mittelbar flächig miteinander verbunden werden.

Weiters ist eine Kamera 13 umfassend einen Bildsensor 14 und das optische Bauteil 1 vorgesehen. Die Kamera 13 ist insbesondere eine Digitalkamera. Das optische Bauteil 1 bildet hierbei im Wesentlichen das Objektiv der Kamera 13 aus, wobei das optische Bauteil 1 ein von der Kamera 13 erfasstes Bild auf dem Bildsensor 14 abbildet. Der Bildsensor 14 kann insbesondere zur Erfassung eines zweidimensionalen Bildes ausgebildet sein. Insbesondere kann vorgesehen sein, dass die Kamera 13 lediglich ein einziges optisches Bauteil 1 aufweist, und bevorzugt frei von weiteren Linsen oder Linsensystemen ist. Die Kamera 13 kann insbesondere eine feste Brennweite aufweisen.

Die Kamera 13 kann insbesondere eine Augenkamera sein. Als Augenkamera wird eine Kamera 13 bezeichnet, welche bei einer Eye-Tracking Brille die Blickrichtung eines Auges 19 des Trägers erfasst.

Der Bildsensor 14 kann insbesondere ein CCD Sensor oder ein CMOS Sensor sein.

An einer dem optischen Bauteil 1 abgewandten Seite des Bildsensors 14 kann insbesondere eine Leiterplatte 20 angeordnet sein, welche Leiterplatte 20 schaltungstechnisch mit dem Bildsensor 14 verbunden ist. Die Leiterplatte 20 kann schaltungstechnisch mit einem Computer, Mikroprozessor und dergleichen verbunden sein, um die Signale des Bildsensors 14 zu verarbeiten.

Weiters ist eine Brille, insbesondere eine Eye-Tracking Brille, umfassend wenigstens eine Kamera 13 vorgesehen. Die wenigstens eine Kamera 13 kann insbesondere im Rahmen der Brille integriert sein.

Die Brille kann insbesondere eine Eye-Tracking Brille sein, bei welcher die Blickrichtung zumindest eines Auges 19 erfasst wird. Derartige Eye-Tracking Brillen können dazu verwendet werden um das Blickverhalten von Probanden zu erforschen und/oder zur Steuerung von Geräten mit den Augen 19. Ein weiteres anwachsendes Anwendungsgebiet von Eye-Tracking Brillen ist die sogenannte Augmented Reality, bei welcher für einen Benutzer zusätzliche Informationen ins Blickfeld eingespielt werden. Zur Erfassung beider Augen 19 können zwei Kameras 13 vorgesehen sein. Die wenigstens eine Kamera 13 kann insbesondere in einem Nasenbereich der Brille angeordnet sein, bevorzugt in den Nasenhaltern. Bei einer Eye-Tracking Brille ist der Abstand der zumindest einen Kamera 13 zu einem zugeordneten Auge 19 des Brillenträgers trotz der unterschiedlichen Körperformen der einzelnen Menschen im Wesentlichen konstant, sodass üblicherweise eine feste Brennweite der Kamera 13 nicht nachteilig ist, oder mit wenigen Brillenmodellen mit fester Brennweite ein Großteil der Bevölkerung abgedeckt werden können.

Es sind aber auch alternative Anwendungen vorgesehen. Beispielsweise könnte die Kamera 13 auch für andere Anwendungen eingesetzt werden, bei welcher die Kamera 13 primär als Sensor eingesetzt wird. Beispielsweise könnte die Kamera bei einer Sortiermaschine verwendet werden, bei welcher das Sortiergut an der Kamera 13 in einem im Wesentlichen fixen Abstand vorbeigeführt wird, wobei die Kamera 13 Größe, Position, Farbe und/oder Proportionen des Sortierguts erfasst.

Zu den Abbildungen in den Fig. 1 bis 19 wird allgemein angemerkt, dass diese primär der Veranschaulichung dienen und insbesondere die Proportionen zum Teil stark verzerrt sind.

In den Fig. 1 bis 7 sind unterschiedliche bevorzugte Ausführungsformen des optischen Bauteils 1 dargestellt.

Insbesondere kann vorgesehen sein, dass der optische Filter 2, die Blende 3 und die Linse 4 unmittelbar flächig miteinander verbunden sind, also der optische Filter 2, die Blende 3 und die Linse 4 an wenigstens einer der beiden anderen Komponenten flächig anliegen und verbunden sind.

Insbesondere kann vorgesehen sein, dass die Blende 3 am optischen Filter 2 unmittelbar flächig aufliegt und mit dem optischen Filter 2 verbunden ist.

Die Blende 3 kann bevorzugt durch eine lichtundurchlässige Schicht mit einer Öffnung um die optische Achse ausgebildet sein. Die lichtundurchlässige Schicht kann insbesondere als Folie aufgeklebt sein oder als Beschichtung ausgebildet sein.

Die Blende 3 kann daher insbesondere eine feste Öffnungsweite aufweisen.

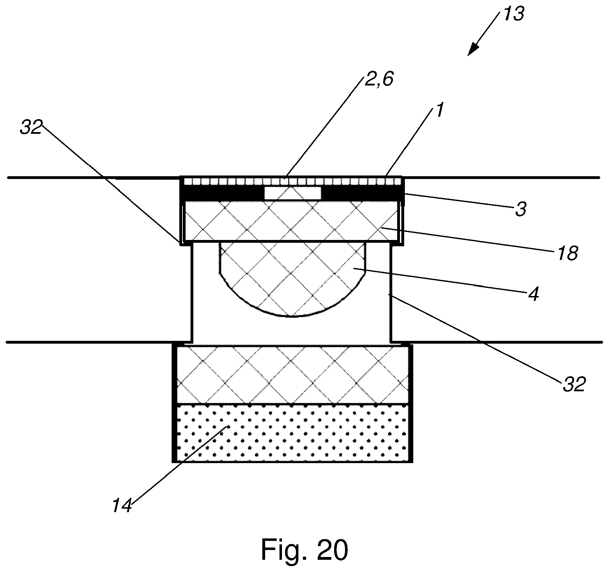

Bezüglich der Anordnung kann vorgesehen sein, dass in einer vorgesehenen Durchstrahlrichtung des Lichts die Blende 3 vor der Linse 4 angeordnet ist. Da die Anordnung des optischen Filters 2 für die geometrische Optik eher unwesentlich ist, kann die Anordnung des optischen Filters 2 freier erfolgen. In Fig. 1 sowie 20 ist beispielsweise der optische Filter 2 in Durchstrahlrichtung vor der Blende 3 angeordnet, während in Fig. 2 der optische Filter 2 in Durchstrahlrichtung nach der Blende 3 angeordnet.

Besonders bevorzugt kann vorgesehen sein, dass in der vorgesehenen Durchstrahlrichtung des Lichts der optische Filter 2 zuerst, also vor der Blende 3 und der Linse 4 angeordnet ist. Dies hat den Vorteil, dass lediglich Licht der gefilterten Wellenlänge in das optische Bauteil 1 eindringen kann, wodurch mögliche Bildfehler durch Streuung von Licht anderer Wellenlänge vermieden werden kann.

Insbesondere kann vorgesehen sein, dass die Blende 3 zwischen dem optische Filter 2 und der Linse 4 angeordnet ist.

Der optische Filter 2 kann nach unterschiedlichen Filterprinzipien funktionieren, insbesondere als Absorptionsfilter, Reflexionsfilter und/oder Interferenzfilter. Insbesondere können auch Filter mit unterschiedliche Filterprinzipien gemeinsam zu dem optischen Filter 2 kombiniert werden.

Bevorzugt kann vorgesehen sein, dass der optische Filter 2 mehrere Filterschichten 5, 6, 7 aufweist, wobei die Filterschichten 5, 6, 7 unterschiedliche Wellenlängenbereiche des Lichtspektrums filtern. Diese Filterschichten 5,6,7 können nach unterschiedlichen Filterprinzipien funktionieren, insbesondre als Absorptionsfilter, Reflexionsfilter und/oder Interferenzfilter.

Die einzelnen Filterschichten 5, 6, 7 des optischen Filters 2 können ebenfalls zumindest mittelbar miteinander verbunden sein. Hierbei kann vorgesehen sein, dass die Filterschichten 5, 6, 7 unmittelbar aneinander anliegen oder durch Komponenten des optischen Bauteils 1 voneinander beabstandet sind.

Insbesondere kann der optische Filter 2 eine erste Filterschicht 5 aufweisen, welche als Absorptionsfilter ausgebildet ist. Absorptionsfilter bestehen aus lichtdurchlässigen Stoffen, welche eine wellenlängenabhängige Absorption aufweisen. Das Material kann insbesondere ein Farbglas oder eine eingefärbte Folie sein. Der Absorptionsfilter kann insbesondere als Tiefpassfilter ausgebildet sein, welcher für Licht tiefer Frequenz und daher großer Wellenlängen transparent ist aber Licht hoher Frequenz und daher kleiner Wellenlängen stärker absorbiert. Ein optischer Filter 2 mit einem Absorptionsfilter als erste Filterschicht 5 ist in den Fig. 1, 2, 3, 6, 7 und 9 beispielhaft dargestellt.

Die erste Filterschicht 5 kann insbesondere zwischen Blende 3 und der Linse 4 angeordnet sein, da der Absorptionsfilter zum Funktionieren eine gewisse Dicke benötigt, und diese Dicke zur Erhöhung des Abstandes zwischen Blende 3 und Linse 4 verwendet werden kann.

Weiters kann vorgesehen sein, dass der optische Filter 2 eine zweite Filterschicht 6 und/oder eine dritte Filterschicht 7, aufweist, und dass die zweite Filterschicht 6 und die dritte Filterschicht 7 als Reflexionsfilter, insbesondere als Interferenzfilter, ausgebildet sind. Die zweite Filterschicht 6 kann insbesondere als Hochpassfilter ausgebildet sein. Beim Reflexionsfilter erfolgt die Wellenabhängigkeit der Transmission durch die Interaktion des Lichts an Grenzflächen, wodurch der Reflexionsfilter insbesondere wesentlich dünner ausgebildet sein kann als ein Absorptionsfilter. Auch hier sind mehrere Arten an Reflexionsfilter bekannt. Es kann vorgesehen sein, dass der Reflexionsfilter als einfach dünne Metallschicht ausgebildet ist, welche im Bereich großer Wellenlängen stärker reflektiert als im Bereich kleinerer Wellenlängen. Weiters kann vorgesehen sein, dass der Reflexionsfilter als Interferenzfilter ausgebildet ist, bei welchen zwei oder mehrere teilreflektierende Grenzflächen derart beabstandet sind, dass nur Licht mit der richtigen Wellenlänge transmittiert wird. Ein optischer Filter 2 mit wenigstens einem Reflexionsfilter als zweite Filterschicht 6 und/oder dritte Filterschicht 7 ist in den Fig. 2 bis 9 beispielhaft dargestellt.

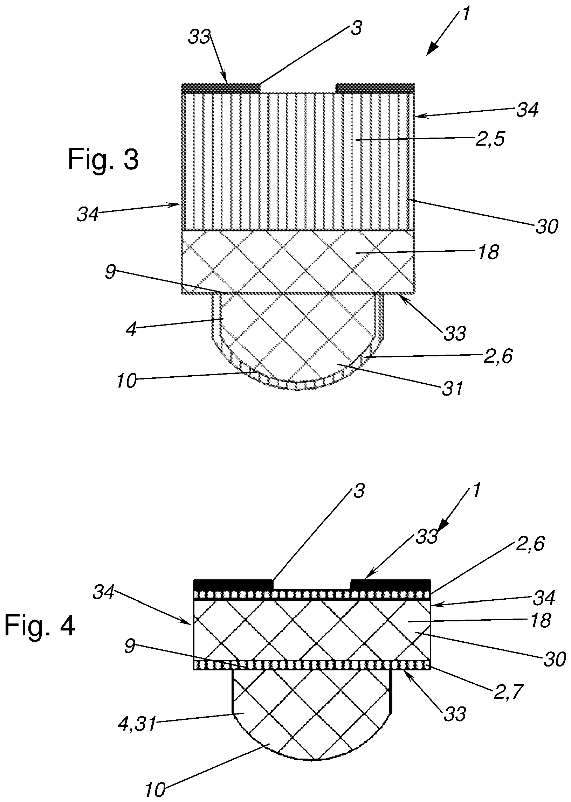

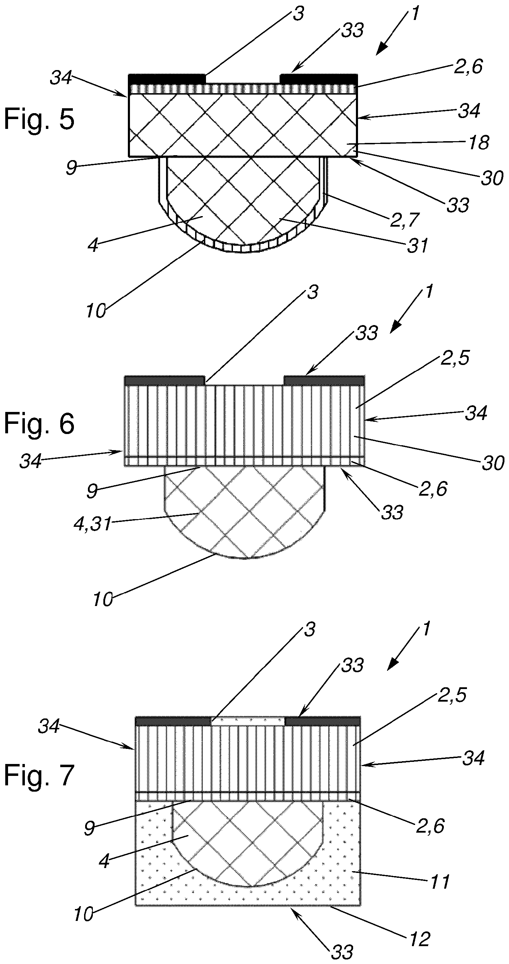

Da der Reflexionsfilter sehr dünn ausgebildet sein kann, kann vorgesehen sein, dass die erste Filterschicht 6 und/oder die dritte Filterschicht 7 auf einer konvexen Seite 10 der Linse 4 angeordnet ist. Dies ist beispielhaft in Fig. 3 und 5 dargestellt.

Es kann aber auch vorgesehen sein, dass der Reflexionsfilter, insbesondere die zweite Filterschicht 6 und/oder die dritte Filterschicht 7, im Wesentlichen plan ausgebildet ist. Hierbei kann der optische Filter 2 als Reflexionsfilter insbesondere auf der Blende 3 angeordnet sein. Dies ist beispielhaft in Fig. 20 dargestellt.

Weiters kann vorgesehen sein, dass das optische Bauteil 1 weiters ein, insbesondere gläsernes, Linsensubstrat 18 umfasst, und dass das Linsensubstrat 18 mit dem optischen Filter 2, der Blende 3 und/oder der Linse 4 an einander zugewandten Flächen zumindest mittelbar flächig miteinander verbunden ist. Das Linsensubstrat 18 kann hierbei das Anbringen der Linse 4 an den restlichen Komponenten erleichtern. Weiters kann das Linsensubstrat 18 verwendet werden um einen notwendigen Abstand zu erreichen.

Besonders bevorzugt kann vorgesehen sein, dass das optische Bauteil 1 lediglich den optischen Filter 2, die Blende 3, die Linse 4 und gegebenenfalls auch das Linsensubstrat 18 umfasst.

Besonders bevorzugt kann vorgesehen sein, dass der optische Filter 2 in einem schmalen ersten Wellenlängenbereich 8 transparent ist. Außerhalb des ersten Wellenlängenbereichs 8 kann ein Transmissionsgrad des optischen Filters 2 wesentlich geringer sein als im ersten Wellenlängenbereich 8. Der optische Filter 2 kann daher insbesondere als spektraler Bandpassfilter ausgebildet sein, welches für Licht lediglich in einem dünnen Spektralbereich einen hohen Transmissionsgrad hat. Dadurch ergibt sich der Vorteil, das gezielt ein Wellenlängenbereich 8 ausgesucht werden kann, bei welchem störendes Umgebungslicht nur in geringer Intensität aufscheint.

Eine Breite des ersten Wellenlängenbereiches 8 kann insbesondere maximal 80 nm, bevorzugt maximal 40 nm, besonders bevorzugt 20 nm, betragen.

An sich sind dem Fachmann eine Vielzahl an Möglichkeiten bekannt, wie ein hoher Transmissionsgrad lediglich in einem schmalen ersten Wellenlängenbereich 8 erreicht werden kann, insbesondere wenn mehrere Filterprinzipien kombiniert werden.

Bevorzugt kann der optische Filter 2 wenigstens zwei optische Kantenfilter aufweisen.

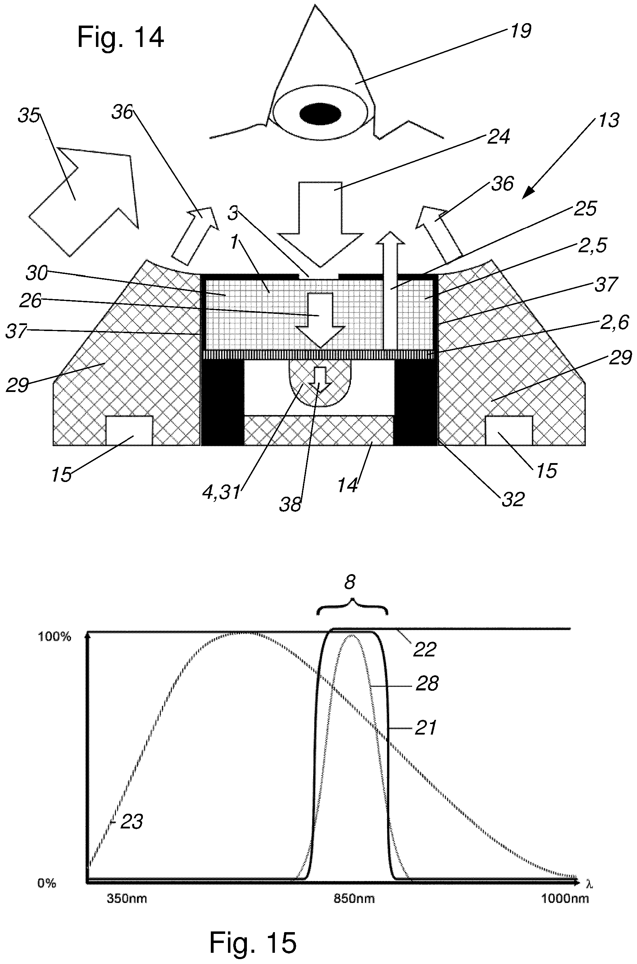

Besonders bevorzugt kann der optische Filter 2 eine Kombination eines optischen Hochpassfilters und eines optischen Tiefpassfilters aufweisen, wobei eine Überlappung beider Kantenfilter den erste Wellenlängenbereich 8 ausbildet. In Fig. 15 ist dieses Wirkprinzip als stark idealisiertes Diagramm dargestellt, wobei die x-Achse die Wellenlänge darstellt und die y-Achse je nach Kurve 21, 22, 23, 28 den spektralen Transmissionsgrad, Empfindlichkeit oder Intensität. Hierbei zeigt die erste Kurve 21 den spektralen Transmissionsgrad des optischen Hochpassfilters und die zweite Kurve 22 den spektralen Transmissionsgrad des optischen Tiefpassfilters. Die spektrale Empfindlichkeit des Bildsensors 14 ist als dritte Kurve 23 eingetragen.

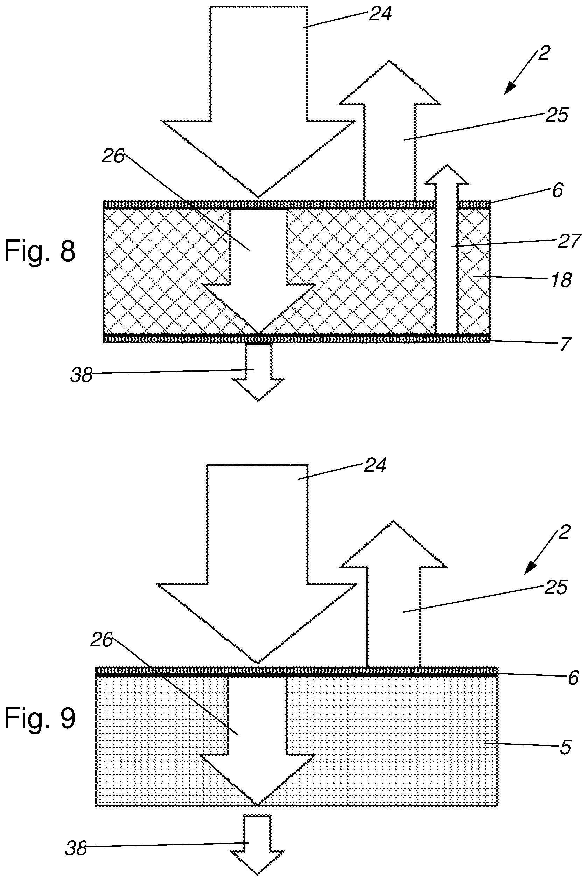

Zwei mögliche Ausführungsformen eines derartigen optischen Filters 2 sind in den Fig. 8 und 9 beispielhaft dargestellt. Der erste Pfeil 24 entspricht dem einfallenden Licht mit vollem Spektrum. An der als Reflexionsfilter ausgebildeten zweiten Filterschicht 6 wird Licht mit einer höheren Wellenlänge als der erste Wellenlängenbereich 8 reflektiert. Dies wird durch den zweiten Pfeil 25 symbolisiert. Bei dem durch den dritten Pfeil 26 angedeuteten transmittierten Licht der zweiten Filterschicht 6 kann dann mittels der als Absorptionsfilter ausgebildeten ersten Filterschicht 5 der Wellenlängenbereich mit kleinerer Wellenlänge als der erste Wellenlängenbereich 8 absorbiert werden, und/oder der Wellenlängenbereich mit kleinerer Wellenlänge als der erste Wellenlängenbereich 8 kann an der als Reflexionsfilter ausgebildeten dritten Filterschicht 7 reflektiert werden, was durch den vierten Pfeil 27 angedeutet ist. Das durch den optischen Filter 2 transmittierte Licht, angedeutet durch den fünften Pfeil 38, hat dann vorwiegend eine Wellenlänge im ersten Wellenlängenbereich 8.

Besonders bevorzugt kann vorgesehen sein, dass der erste Wellenlängenbereich 8 des optischen Filters 2 außerhalb des sichtbaren Wellenlängenbereiches ist, insbesondere im Infraroten Wellenlängenbereich, besonders bevorzugt im nahen Infraroten Wellenlängenbereich. Bevorzugt kann vorgesehen sein, dass eine Untergrenze des ersten Wellenlängenbereichs 8 mindestens 750 nm, bevorzugt mindestens 800 nm, besonders bevorzugt mindestens 820 nm beträgt. Weiters kann vorgesehen sein, dass eine Obergrenze des ersten Wellenlängenbereichs 8 maximal 1.400 nm, bevorzugt maximal 1.000 nm, besonders bevorzugt maximal 870 nm beträgt. Dadurch ergibt sich der Vorteil, dass das Auge 19, oder ein anderer optisch zu erfassender Gegenstand, aktiv im ersten Wellenlängenbereich 8 beleuchtet werden kann, ohne das der Benutzer irritiert wird.

Besonders bevorzugt kann vorgesehen sein, dass die Kamera 13 zusätzlich eine Beleuchtungseinheit 15 aufweist, wobei die Beleuchtungseinheit 15 vorwiegend Licht innerhalb des ersten Wellenlängenbereiches 8 des optischen Filters 2 ausstrahlt. Diese aktive Beleuchtung durch die Beleuchtungseinheit 15 hat mehrere Vorteile. Einerseits ist die Erfassung des Auges 19 oder eines anderen zu erfassenden Gegenstandes unabhängiger von etwaiger Lichtstrahlung aus der Umgebung. Weiters kann vorgesehen sein, dass die Belichtung durch die Beleuchtungseinheit 15 innerhalb des ersten Wellenlängenbereiches 8 des optischen Filters 2 wesentlich stärker sein kann als durch das Licht aus der Umgebung, wodurch die Belichtung des Bildsensors 14 kaum variiert und/oder durch die Lichtstärke der Beleuchtungseinheit 15 geregelt werden kann.

Die Beleuchtungseinheit 15 kann insbesondere ein Infrarotstrahler sein. Eine spektrale Verteilung der Intensität des Lichts der Beleuchtungseinheit 15 ist durch vierte Kurve 28 in Fig. 15 dargestellt.

Weiters kann vorgesehen sein, dass die Beleuchtungseinheit 15 wenigstens eine LED umfasst. LEDs haben hier den Vorteil, dass diese klein und hoch effizient sind, und dass diese einfach als im Wesentlichen monochromatische Lichtquelle ausgebildet werden können.

Weiters kann vorgesehen sein, dass die Beleuchtungseinheit 15 einen Lichtleiter 29 aufweist, und dass der Lichtleiter 29 um das optische Bauteil 1 angeordnet ist. Dadurch kann eine gute und gleichmäßige Beleuchtung des zu erfassenden Gegenstandes sichergestellt werden. Eine derart ausgebildete Kamera 13 ist beispielhaft in Fig. 14 dargestellt, wobei der sechste Pfeil 35 das Licht aus der Umgebung symbolisiert, welches ein breites Wellenlängenspektrum aufweisen kann, und der siebente Pfeil 36 das Licht von der Beleuchtungseinheit 15 symbolisiert, welches vorwiegend in dem erste Wellenlängenbereich 8 strahlt.

Weiters kann vorgesehen sein, dass die Brille Brillenscheiben aufweist, durch welche der Benutzer beim tragen der Brille blickt, und dass die Brillenscheiben im ersten Wellenlängenbereich 8 im Wesentlichen undurchsichtig sind. Dadurch kann störendes Licht im relevanten Wellenlängenbereich aus der Umgebung weiter unterdrückt werden. Weiters ist der Träger einer derartigen Brille für Infrarotsichtgeräte nicht leichter zu erfassen.

Insbesondere kann vorgesehen sein, dass die Linse 4 eine plane Seite 9 und eine konvexe Seite 10 aufweist. Die plane Seite 9 der Linse kann einfach flächig mit einer der anderen Komponenten des optischen Bauteils 1 verbunden werden. Die konvexe Seite 10 kann asphärisch sein, sodass ohne zusätzliche Linsen sphärische Linsenfehler eliminiert werden können. Dadurch kann zumindest mittels der planen Seite 9 einfach eine flächige Verbindung zu einem planen Untergrund erzeugt werden.

Insbesondere kann vorgesehen sein, dass die konvexe Seite 10 dem Bildsensor 14 zugewandt ist. Dadurch weist die plane Seite 9 nach Außen. Dadurch kann das optische Bauteil 1 besser in einer Außenhülle der Kamera 13 integriert werden, wobei das optische Bauteil 1 plan mit der umliegenden Außenhülle anschließen kann, ohne dass sich Linse aus der übrigen Außenhülle erhebt. Dadurch kann die Kamera 13 kompakter gebaut werden, ist leichter zu reinigen, und die Gefahr einer Beschädigung der Linse 4 ist geringer.

Der optische Bauteil 1 kann insbesondere eine Form bestehend aus einem ersten Teilkörper 30 mit zwei planparallelen Deckflächen 33 und einen, an einer der Deckflächen 33 des ersten Teilkörpers 30 angefügten zweiten Teilkörper 31 aufweisen, wobei der zweite Teilkörper 31 im Wesentlichen durch die Linse 4 ausgebildet wird.

Der erste Teilkörper 30 kann insbesondere einen rechteckigen, bevorzugt quadratischen, Querschnitt aufweisen.

Diese Form des optischen Bauteils 1 lässt sich einfach mittels einer Halterung 32 mit dem Bildsensor 14 verbinden, insbesondere aufsetzen. Hierbei kann vorgesehen sein, dass das optische Bauteil 1 mittels der Halterung 32 auf den Bildsensor 14 aufgesetzt wird. Dadurch kann die Platzierung des optischen Bauteils auf dem Bildsensor einfach erfolgen.

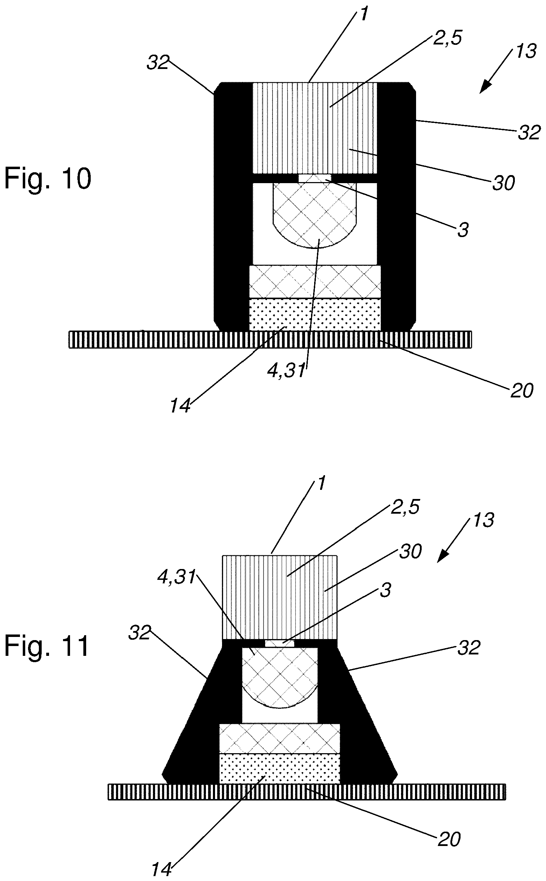

Insbesondere kann vorgesehen sein, dass eine Mantelfläche 34 des ersten Teilkörpers 30 mit der Halterung 32 verbunden ist. Ein derartiger Aufbau der Kamera 13 ist in den Fig. 10 beispielhaft dargestellt.

Alternativ kann vorgesehen sein, dass jene Deckfläche 33 des ersten Teilkörpers, an welcher die Linse 4 angefügt ist, mit der Halterung 32 verbunden ist. Ein derartiger Aufbau der Kamera 13 ist in den Fig. 11 bis 14 in unterschiedlichen Ausführungsformen dargestellt.

Eine weitere Alternative besteht darin, dass anschließend an der konvexen Seite 10 der Linse 4 ein Füllmaterial 11 mit kleinerem Brechungsindex als die Linse 4 angeordnet ist, wobei eine der Linse 4 abgewandte Seite 12 des Füllmaterials 11 plan ist. Hiebei kann der gesamte optische Bauteil 1 als ein Körper mit zwei im Wesentlichen planparallelen Deckflächen 33, sowie eine umlaufende Mantelfläche 34, ausgebildet werden. Dadurch hat das optische Bauteil 1 eine plane Deckfläche zum direkten Aufsetzten auf den Bildsensor 14. Ein derart ausgebildetes optisches Bauteil 1 ist in den Fig. 7 beispielhaft dargestellt.

Insbesondere kann vorgesehen sein, dass das optische Bauteil 1 direkt auf dem Bildsensor 14 aufgesetzt ist. Dadurch kann auf die zusätzliche Halterung 32 verzichtet werden.

Besonders bevorzugt kann vorgesehen sein, dass eine Außenhülle der Kamera 13 eine Durchbrechung aufweist, dass die Durchbrechung als Halterung 32 für das optische Bauteil 1 ausgebildet ist, dass das optische Bauteil 1 in der Durchbrechung angeordnet ist und diese verschließt. Dadurch kann eine besonders kompakte Bauform der Kamera 13 erreicht werden, wobei das optische Bauteil einen integralen Teil der Außenhülle der Kamera 13 bildet. Dies ist beispielhaft in Fig. 20 dargestellt.

Insbesondere kann vorgesehen sein, dass das optische Bauteil 1 von einer Außenseite der Außenhülle eingesetzt ist, und der Bildsensor 14 an einer Innenseite der Außenhülle mt der Außenhülle verbunden ist. Dadurch bildet die Außenhülle auf einfache Weise die Halterung 32 zwschen dem optischen Bauteil 1 und dem Bildsensor 14 aus.

Weiters kann vorgesehen sein, dass eine der Außenseite zugewandte Fläche des optischen Bauteils 1 plan ist, und bevorzugt im Wesentlichen mit der umliegenden Außenhülle fluchtet. Dies kann dadurch erreicht werden, dass das optische Bauteil 1 derart in der Halterung 32 eingesetzt ist, dass plane Seite 9 der Linse 4 der Außenseite zugewandt ist, und die konvexe Seite 10 der Linse 4 der Innenseite der Außenhülle, und damit dem Bildsensor 14 zugewandt ist. Dadurch ist die Kamera leicht zu reinigen und gut vor Beschädigungen des optischen Bauteils 1 geschützt.

Die fluchtende Anordnung an der Außenseite kann inbesondere dadurch erreicht werden, dass die Durchbrechung an der Außenseite eine Aufnahme mit einer anschließenden Verengung der Durchbrechung aufweist, und der optische Bauteil 1 in der Aufnahme angeordnet ist.

Der Bildsensor 14 kann insbesondere an einem Anschlag an der Innenseite der Außenhülle aufliegen. Alternativ kann auch der Bildsensor 14 in einer weiteren Aufnahme der Durchbrechung angeordnet sein.

Weiters kann vorgesehen sein, dass an der Mantelfläche 34 des optischen Bauteils 1 ein undurchsichtiger Lichtschutz 37 angeordnet ist. Dadurch kann Licht nicht seitlich in das optische Bauteil 1 strahlen.

Bei der Herstellung kann besonders bevorzugt vorgesehen sein, dass in einem Herstellungsverfahren mehrere optische Bauteile 1 gemeinsam hergestellt werden.

Hierbei kann insbesondere vorgesehen sein, dass ausgehend von einer Grundträgerplatte 16 eine Vielzahl an seitlich zusammenhängenden optischen Bauteilen 1 ausgebildet werden, und anschließend die optischen Bauteile 1 vereinzelt werden. Die Grundträgerplatte 16 bildet hierbei die Basis für mehrere optische Bauteile 1, welche durch ein flächiges Aufbringen weiterer Komponenten, wie Blenden 3 oder Linsen 4, als ein Block hergestellt werden. Das Vereinzeln der optischen Bauteile 1 kann insbesondere durch Schneiden erfolgen. Dadurch können die optischen Bauteile 1 in großer Stückzahl präzise hergestellt werden.

Insbesondere kann vorgesehen sein, dass die Grundträgerplatte 16 zumindest einen Teil der optischen Filter 2 der optischen Bauteile 1 ausbildet. Die Grundträgerplatte 16 kann hierbei insbesondere den Absorptionsfilter ausbilden. Dadurch kann die Höhe des optischen Bauteils 1 gering gehalten werden.

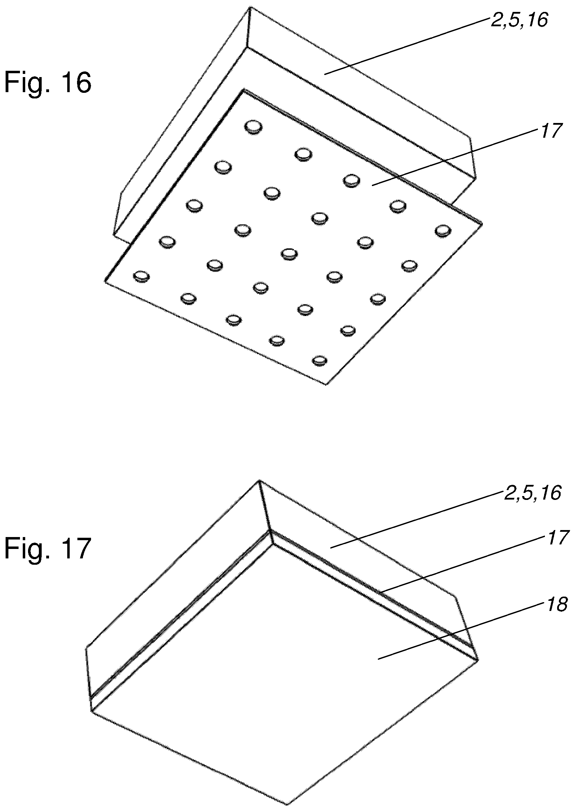

Bevorzugt kann vorgesehen sein, dass zur Herstellung der Blenden 3 eine Lochfolie 17 zumindest mittelbar auf die Grundträgerplatte 16 aufgebracht wird oder eine Lochmaske zumindest mittelbar auf die Grundträgerplatte 16 beschichtet wird. Es werden daher sämtliche Blenden 3 des Blockes an optischen Bauteilen 1 auf einmal aufgebracht, sei es durch das Aufbringen, insbesondere das Ankleben, einer Lochfolie 17, also einer Folie mit einer Vielzahl an regelmäßig angeordneten Löchern, welche später die Blendenöffnungen der einzelnen Blenden 3 ausbilden, oder durch das Beschichten einer lichtundurchlässigen Schicht mit einem regelmäßigen Lochmuster, welche später die Blendenöffnungen der einzelnen Blenden 3 ausbilden. Dadurch können in einem Arbeitsschritt die Blenden 3 mehrerer optischer Bauteile 1 lagegenau positioniert werden. Das Aufbringen einer Lochfolie 17 auf die Grundplatte 16 ist in Fig. 16 dargestellt.

In einem weiteren Schritt kann vorgesehen sein, dass ein, insbesondere gläsernes, Linsensubstrat 18 zumindest mittelbar flächig mit der Grundträgerplatte 16 verbunden wird, und eine Anordnung an Linsen 4 zumindest mittelbar flächig mit dem Linsensubstrat 18 verbunden wird. Das Linsensubstrat 18 ist eine planparallele Platte, welche das Aufbringen der Linsen 4 erleichtert und zum Ausgleich von Abständen der Komponenten innerhalb des optischen Bauteils 1 dienen kann. In Fig. 17 ist das Linsensubstrat 18 mittelbar über die Lochfolie 17 flächig mit der Grundträgerplatte 16 verbunden.

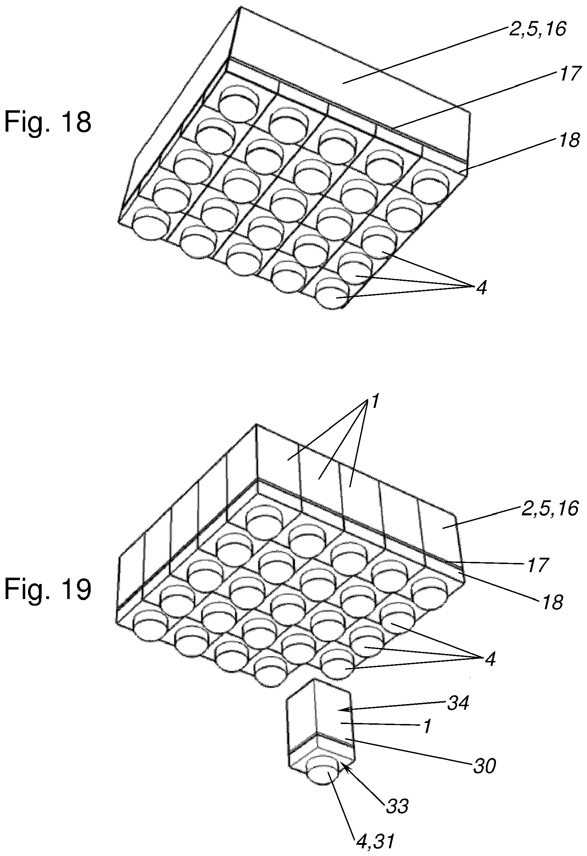

Nach dem Aufbringen des Linsensubstrats 18 können die Linsen 4 an deren planen Seite 9 flächig an dem Linsensubstrat 18 befestigt werden. Dies ist in Fig. 18 dargestellt.

Wie in Fig. 19 dargestellt kann als weiterer Schritt kann der Block an optischen Bauteilen 1 zerschnitten werden, insbesondere in einem quadratischen Muster, wodurch der Block an optischen Bauteilen 1 in eine Vielzahl einzelner optischen Bauteile 1 vereinzelt werden kann.

## Patentansprüche

1. Kamera (13) umfassend einen Bildsensor (14) und ein optisches Bauteil (1), wobei das optische Bauteil (1) einen optischen Filter (2), eine Blende (3) und eine Linse (4) umfasst, wobei der optische Filter (2), die Blende (3) und die Linse (4) optisch zusammenwirken, wobei der optische Filter (2), die Blende (3) und die Linse (4) an einander zugewandten Flächen zumindest mittelbar flächig miteinander verbunden sind, wobei eine Außenhülle der Kamera (13) eine Durchbrechung aufweist, **dadurch gekennzeichnet, dass** die Durchbrechung als Halterung (32) für das optische Bauteil (1) ausgebildet ist, dass das optische Bauteil (1) in der Durchbrechung angeordnet ist und diese verschließt, dass eine der Außenseite der Außenhülle zugewandte Fläche des optischen Bauteils (1) plan ist, und dass in einer vorgesehenen Durchstrahlrichtung des Lichts die Blende (3) vor der Linse (4) angeordnet ist.

2. Kamera (13) nach Anspruch 1, **dadurch gekennzeichnet, dass** die der Außenseite zugewandte Fläche des optischen Bauteils (1) im Wesentlichen mit der umliegenden Außenhülle fluchtet.

3. Kamera (13) nach Anspruch 1 oder 2, **dadurch gekennzeichnet, dass** der optische Filter (2) in einem schmalen ersten Wellenlängenbereich (8) transparent ist.

4. Kamera (13) nach Anspruch 3, **dadurch gekennzeichnet, dass** der erste Wellenlängenbereich (8) des optischen Filters (2) außerhalb des sichtbaren Wellenlängenbereiches ist, insbesondere im Infraroten Wellenlängenbereich, besonders bevorzugt im nahen Infraroten Wellenlängenbereich.

5. Kamera (13) nach einem der Ansprüche 1 bis 4, **dadurch gekennzeichnet, dass** die Linse (4) eine plane Seite (9) und eine konvexe Seite (10) aufweist.

6. Kamera (13) nach Anspruch 5, **dadurch gekennzeichnet, dass** anschließend an der konvexen Seite (10) der Linse (4) ein Füllmaterial (11) mit kleinerem Brechungsindex als die Linse (4) angeordnet ist, wobei eine der Linse (4) abgewandte Seite (12) des Füllmaterials (11) plan ist.

7. Kamera (13) nach Anspruch 5 oder 6, **dadurch gekennzeichnet, dass** das optische Bauteil (1) derart in der Halterung (32) eingesetzt ist, dass die plane Seite (9) der Linse (4) der Außenseite zugewandt ist, und die konvexe Seite (10) der Linse (4) einer Innenseite der Außenhülle, und damit dem Bildsensor (14) zugewandt ist.

8. Kamera (13) nach einem der Ansprüche 1 bis 7, **dadurch gekennzeichnet, dass** das optische Bauteil (1) direkt auf dem Bildsensor (14) aufgesetzt ist.

9. Kamera (13) nach einem der Ansprüche 1 bis 8, **dadurch gekennzeichnet, dass** die der Außenseite der Außenhülle zugewandte Fläche des optischen Bauteils (1) im Wesentlichen mit der umliegenden Außenhülle fluchtet.

10. Kamera (13) nach einem der Ansprüche 1 bis 9, **dadurch gekennzeichnet, dass** die Kamera (13) zusätzlich eine Beleuchtungseinheit (15) aufweist, wobei die Beleuchtungseinheit (15) vorwiegend Licht innerhalb des ersten Wellenlängenbereiches (8) des optischen Filters (2) ausstrahlt.

11. Verfahren zum Herstellen einer Kamera umfassend einen Bildsensor (14) und ein optisches Bauteil (1), wobei das optische Bauteils (1) einen optischen Filter (2), eine Blende (3) und eine Linse (4) umfasst, wobei der optische Filter (2), die Blende (3) und die Linse (4) optisch zusammenwirken, wobei zum Herstellen des optischen Bauteils (1) der optische Filter (2), die Blende (3) und die Linse (4) an einander zugewandten Flächen zumindest mittelbar flächig miteinander verbunden werden, wobei eine Außenhülle der Kamera (13) eine Durchbrechung aufweist, **dadurch gekennzeichnet, dass** die Durchbrechung als Halterung (32) für das optische Bauteil (1) ausgebildet ist, dass das optische Bauteil (1) in der Durchbrechung angeordnet wird und diese verschließt, und eine der Außenseite der Außenhülle zugewandte Fläche des optischen Bauteils (1) plan ist, und dass in einer vorgesehenen Durchstrahlrichtung des Lichts die Blende (3) vor der Linse (4) angeordnet wird.

12. Verfahren nach Anspruch 11, **dadurch gekennzeichnet, dass** ausgehend von einer Grundträgerplatte (16) eine Vielzahl an seitlich zusammenhängenden optischen Bauteilen (1) ausgebildet werden, und anschließend die optischen Bauteile (1) vereinzelt werden.

13. Verfahren nach Anspruch 12, **dadurch gekennzeichnet, dass** zur Herstellung der Blenden (3) eine Lochfolie (17) zumindest mittelbar auf die Grundträgerplatte (16) aufgebracht wird oder eine Lochmaske zumindest mittelbar auf die Grundträgerplatte (16) beschichtet wird.

14. Verfahren nach Anspruch 12 oder 13, **dadurch gekennzeichnet, dass** die Grundträgerplatte (16) zumindest einen Teil der optischen Filter (2) der optischen Bauteile (1) ausbildet.

15. Verfahren nach einem der Ansprüche 12 bis 14, **dadurch gekennzeichnet, dass** ein, insbesondere gläsernes, Linsensubstrat (18) zumindest mittelbar flächig mit der Grundträgerplatte (16) verbunden wird, und eine Anordnung an Linsen (4) zumindest mittelbar flächig mit dem Linsensubstrat (18) verbunden wird.

## Claims

1. Camera (13) comprising an image sensor (14) and an optical component (1), wherein the optical component (1) comprises an optical filter (2), an aperture (3) and a lens (4), wherein the optical filter (2), the aperture (3) and the lens (4) interact optically, wherein the optical filter (2), the aperture (3) and the lens (4) are connected to one another at least indirectly in a planar manner on mutually facing surfaces, wherein an outer shell of the camera (13) has an opening, **characterized in that** the opening is designed as a holder (32) for the optical component (1), **in that** the optical component (1) is arranged in the opening and closes it, **in that** a surface of the optical component (1) facing the outside of the outer shell is planar, and **in that** the aperture (3) is arranged in front of the lens (4) in an intended direction of transmission of the light.

2. Camera (13) according to claim 1, **characterized in that** the surface of the optical component (1) facing the outside is substantially flush with the surrounding outer shell.

3. Camera (13) according to claim 1 or 2, **characterized in that** the optical filter (2) is transparent in a narrow first wavelength range (8).

4. Camera (13) according to claim 3, **characterized in that** the first wavelength range (8) of the optical filter (2) is outside the visible wavelength range, in particular in the infrared wavelength range, especially preferably in the near infrared wavelength range.

5. Camera (13) according to one of claims 1 to 4, **characterized in that** the lens (4) has a planar side (9) and a convex side (10).

6. Camera (13) according to claim 5, **characterized in that** a filler material (11) having a smaller refractive index than the lens (4) is adjacently arranged on the convex side (10) of the lens (4), wherein a side (12) of the filler material (11) facing away from the lens (4) is planar.

7. Camera (13) according to claim 5 or 6, **characterized in that** the optical component (1) is inserted into the holder (32) in such a way that the planar side (9) of the lens (4) faces the outside, and the convex side (10) of the lens (4) faces an inside of the outer shell and thus the image sensor (14).

8. Camera (13) according to one of claims 1 to 7, **characterized in that** the optical component (1) is placed directly on the image sensor (14).

9. Camera (13) according to one of claims 1 to 8, **characterized in that** the surface of the optical component (1) facing the outside of the outer shell is substantially flush with the surrounding outer shell.

10. Camera (13) according to one of claims 1 to 9, **characterized in that** the camera (13) additionally comprises an illumination unit (15), wherein the illumination unit (15) predominantly emits light within the first wavelength range (8) of the optical filter (2).

11. Method for producing a camera comprising an image sensor (14) and an optical component (1), wherein the optical component (1) comprises an optical filter (2), an aperture (3) and a lens (4), wherein the optical filter (2), the aperture (3) and the lens (4) interact optically, wherein, in order to produce the optical component (1), the optical filter (2), the aperture (3) and the lens (4) are connected to one another at least indirectly in a planar manner on mutually facing surfaces, wherein an outer casing of the camera (13) has an opening, **characterized in that** the opening is designed as a holder (32) for the optical component (1), **in that** the optical component (1) is arranged in the opening and closes it, and a surface of the optical component (1) facing the outside of the outer casing is planar, and **in that** the aperture (3) is arranged in front of the lens (4) in an intended direction of transmission of the light.

12. Method according to claim 11, **characterized in that,** starting from a base carrier plate (16), a plurality of laterally connected optical components (1) are formed, and subsequently the optical components (1) are separated.

13. Method according to claim 12, **characterized in that,** for the production of the apertures (3), a perforated foil (17) is applied at least indirectly to the base carrier plate (16) or a shadow mask is coated at least indirectly onto the base carrier plate (16).

14. Method according to claim 12 or 13, **characterized in that** the base carrier plate (16) forms at least part of the optical filters (2) of the optical components (1).

15. Method according to one of claims 12 to 14, **characterized in that** a lens substrate (18), in particular a glass lens substrate, is connected at least indirectly in a planar manner to the base carrier plate (16), and an arrangement of lenses (4) is connected at least indirectly in a planar manner to the lens substrate (18).

## Revendications

1. Caméra (13) comprenant un capteur d'image (14) et un composant optique (1), dans laquelle le composant optique (1) comprend un filtre optique (2), un diaphragme (3) et une lentille (4), le filtre optique (2), le diaphragme (3) et la lentille (4) fonctionnant ensemble du point de vue optique, le filtre optique (2), le diaphragme (3) et la lentille (4) étant assemblés les uns aux autres à plat, au moins indirectement, sur leurs surfaces tournées l'une vers l'autre, dans laquelle une enveloppe extérieure de la caméra (13) présente une ouverture, **caractérisée en ce que** l'ouverture est conçue comme une monture (32) pour le composant optique (1), **en ce que** le composant optique (1) est disposé dans l'ouverture et ferme celle-ci, **en ce qu'**une surface du composant optique (1) tournée vers l'extérieur de l'enveloppe extérieure est plane et **en ce que** le diaphragme (3) est disposé avant la lentille (4) dans une direction prévue de passage de la lumière.

2. Caméra (13) selon la revendication 1, **caractérisée en ce que** la surface du composant optique (1) tournée vers l'extérieur est sensiblement de niveau avec l'enveloppe extérieure qui l'entoure.

3. Caméra (13) selon la revendication 1 ou 2, **caractérisée en ce que** le filtre optique (2) est transparent dans une première plage de longueur d'ondes (8) étroite.

4. Caméra (13) selon la revendication 3, **caractérisée en ce que** la première plage de longueur d'ondes (8) du filtre optique (2) se situe en dehors de la plage de longueur d'ondes visible, en particulier dans la plage de longueur d'ondes de l'infrarouge, de préférence dans la plage de longueur d'ondes du proche infrarouge.

5. Caméra (13) selon l'une des revendications 1 à 4, **caractérisée en ce que** la lentille (4) présente une face plane (9) et une face convexe (10).

6. Caméra (13) selon la revendication 5, **caractérisée en ce qu'**un matériau de remplissage (11) ayant un indice de réfraction plus faible que la lentille (4) est disposé à la suite de la face convexe (10) de la lentille (4), une face (12) du matériau de remplissage (11) tournée à l'opposé de la lentille (4) étant plane.

7. Caméra (13) selon la revendication 5 ou 6, **caractérisée en ce que** le composant optique (1) est inséré dans la monture (32) de telle manière que la face plane (9) de la lentille (4) soit tournée vers l'extérieur et que la face convexe (10) de la lentille (4) soit tournée vers l'intérieur de l'enveloppe extérieure et ainsi vers le capteur d'image (14).

8. Caméra (13) selon l'une des revendications 1 à 7, **caractérisée en ce que** le composant optique (1) est posé directement sur le capteur d'image (14).

9. Caméra (13) selon l'une des revendications 1 à 8, **caractérisée en ce que** la surface du composant optique (1) tournée vers l'extérieur de l'enveloppe extérieure est sensiblement de niveau avec l'enveloppe extérieure qui l'entoure.

10. Caméra (13) selon l'une des revendications 1 à 9, **caractérisée en ce que** la caméra (13) présente en outre une unité d'éclairage (15), laquelle unité d'éclairage (15) émet principalement de la lumière dans la première plage de longueur d'ondes (8) étroite du filtre optique (2).

11. Procédé pour la fabrication d'une caméra comprenant un capteur d'image (14) et un composant optique (1), dans lequel le composant optique (1) comprend un filtre optique (2), un diaphragme (3) et une lentille (4), le filtre optique (2), le diaphragme (3) et la lentille (4) fonctionnant ensemble du point de vue optique, dans lequel, afin de fabriquer le composant optique (1), le filtre optique (2), le diaphragme (3) et la lentille (4) sont assemblés les uns aux autres à plat, au moins indirectement, sur leurs surfaces tournées l'une vers l'autre, dans lequel une enveloppe extérieure de la caméra (13) présente une ouverture, **caractérisé en ce que** l'ouverture est conçue comme une monture (32) pour le composant optique (1), **en ce que** le composant optique (1) est disposé dans l'ouverture et ferme celle-ci et une surface du composant optique (1) tournée vers l'extérieur de l'enveloppe extérieure est plane et **en ce que** le diaphragme (3) est disposé avant la lentille (4) dans une direction prévue de passage de la lumière.

12. Procédé selon la revendication 11, **caractérisé en ce que** plusieurs composants optiques (1) reliés par leurs côtés sont formés à partir d'une plaquette de support de base (16) et les composants optiques (1) sont ensuite séparés.

13. Procédé selon la revendication 12, **caractérisé en ce que**, pour fabriquer les diaphragmes (3), une feuille perforée (17) est posée au moins indirectement sur la plaquette de support de base (16) ou un masque perforé est appliqué au moins indirectement sur la plaquette de support de base (16).

14. Procédé selon la revendication 12 ou 13, **caractérisé en ce que** la plaquette de support de base (16) forme au moins une partie du filtre optique (2) des composants optiques (1).

15. Procédé selon l'une des revendications 12 à 14, **caractérisée en ce qu'**un substrat de lentilles (18), en particulier en verre, est assemblé au moins indirectement à plat avec la plaquette de support de base (16) et une disposition de lentilles (4) est assemblée au moins indirectement à plat avec le substrat de lentilles (18).
